# FASCICULE DE BREVET EUROPEEN

(11) **EP 0 431 662 B1**
(45) Date de publication et mention de la délivrance du brevet: **19.07.1995**
(21) Numéro de dépôt: 90203056.8
(22) Date de dépôt: 19.11.1990
(51) Int. Cl.: G05D 1/00, B64C 39/02

(54) **Système de contrôle d'un aéronef téléguidé**
System zum Steuern eines ferngesteuerten Luftfahrzeugs
Control system for remotely piloted aircraft

(30) Priorité: 04.12.1989 FR 8916088
(43) Date de publication de la demande: 12.06.1991
(73) Titulaire: TECHNO SUD INDUSTRIES, 31700 Blagnac (FR)
(72) Inventeur: Heyche, Albert, F-31250 Revel (FR); Latteur, Alain, B-1000 Bruxelles (BE); Dekoninck, Philippe,, B-1050 Bruxelles (BE)
(74) Mandataire: Cabinet BARRE LAFORGUE & associés

(56) Documents cités:
- DE-A- 2 713 140
- DE-A- 3 908 315
- US-A- 3 117 749
- US-A- 4 765 567
- Proceedings IEEE/AIAA 7th Digital Avionics Systems Conference; 13-16 Octobre 1986 Fort Worth,Texas US;pages 475-482;A.D. Vandersteen: "Avionics for the small remotely piloted vehicle"

## Description

L'invention concerne un système de contrôle d'un aéronef téléguidé équipé de servomoteurs de commande, en particulier hélicoptère téléguidé équipé de servomoteurs pour la manoeuvre du pas collectif et du plateau cyclique (inclinaison avant/arrière, gauche/droite), d'un servomoteur d'anticouple et d'un servomoteur de carburation.

On connaît des systèmes de téléguidage d'aéronefs qui permettent un pilotage à distance.

Des exemples se trouvent dans les documents DE-A-2 713 140, DE-A-3 908 315 et dans les Procédés de IEEE/AIAA (7th Digital Avionics Systems Conference; 13-16 Octobre 1986 Fort Worth, Texas, US); pages 475-482; A.D.Vandersteen: "Avionics for the small remotely piloted vehicle", qui visent le contrôle d'avions et non d'hélicoptères, et dans le cas d'un avion, le problème de contrôle est très différent et beaucoup moins complexe. Ces systèmes conduisent à un pilotage difficile puisque le pilote doit tenir compte de diverses interactions : interactions appareil/environnement, interactions mutuelles entre organes de l'appareil, et le pilotage s'avère particulièrement complexe dans le cas d'un hélicoptère.

Le document US-A-3 117 749 vise un hélicoptère grandeur nature ayant un pilote à bord, qui est associé à des moyens d'aide au pilotage assurant en phase d'atterrissage une stabilisation de celui-ci. Les moyens visés sont différents ; il est à noter, en particulier, que l'hélicoptère n'est pas télécommandé, les informations transitant par un câble 51.

La présente invention vise à fournir un système de contrôle capable de décharger le pilote des contraintes engendrées par les diverses interactions précitées.

Un objectif de l'invention est en particulier d'assurer une compensation automatique des perturbations momentanées ou permanentes, par commande des servomoteurs en vue d'éviter que l'aéronef ne se mette dans des assiettes dangereuses.

Un autre objectif, dans le cas d'un hélicoptère téléguidé, est de commander de façon automatique le servomoteur d'anticouple afin de compenser des variations de régime du moteur ou des variations du pas collectif, ceci dans le but d'assurer de façon automatique et plus fine la stabilité angulaire de l'appareil autour de l'axe des lacets.

Un autre objectif, toujours dans le cas d'un hélicoptère téléguidé, est d'éviter les variations d'altitude dues en virage à des modifications du pas incident (manoeuvre du plateau cyclique), en engendrant de façon automatique des variations du pas collectif assurant une stabilité en altitude.

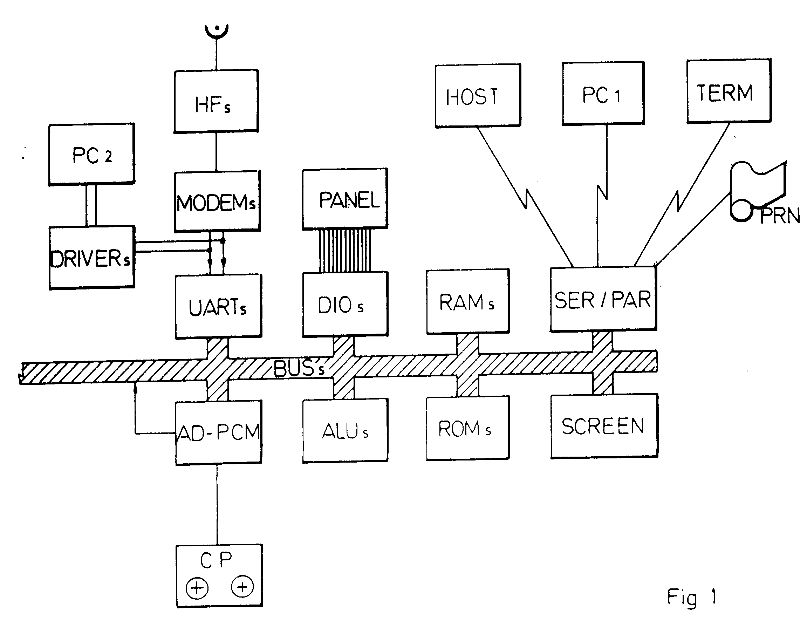

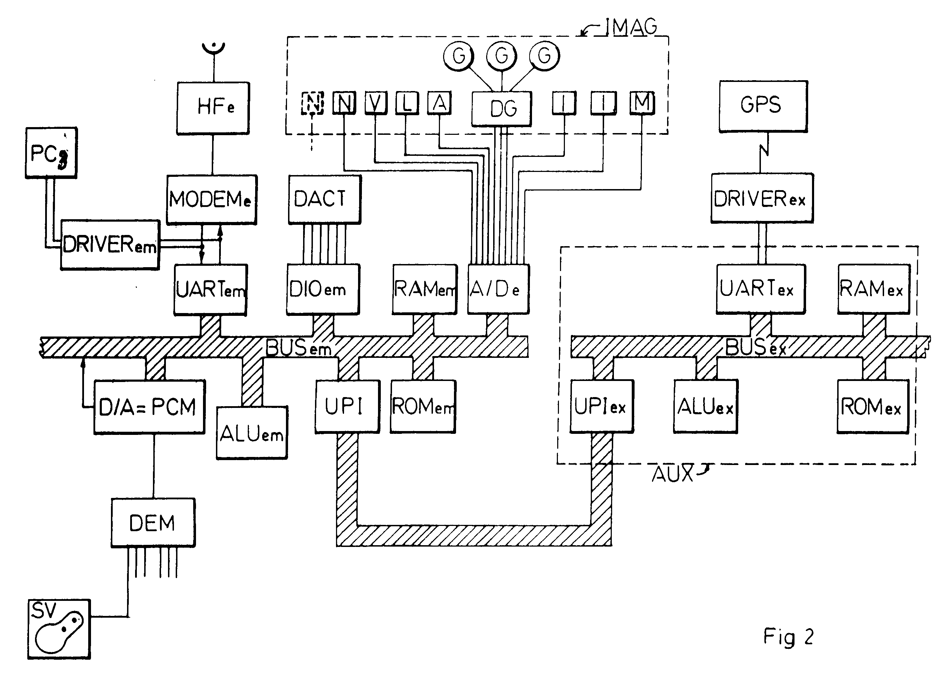

Le système de contrôle visé par l'invention comprend (a) une infrastructure de pilotage à distance et (b) un dispositif embarqué sur l'aéronef. Conformément à l'invention, cette infrastructure de pilotage à distance et ce dispositif embarqué possèdent une architecture et des fonctionnalités telles que décrites ci-après respectivement en référence aux figures 1 et 2.

L'infrastructure de pilotage à distance (figure 1) est généralement disposée au sol mais peut également être disposée dans un centre de pilotage mobile, par exemple aéronef, véhicule, bateau...

Comme le montre la figure 1, cette infrastructure comprend une console de pilotage CP adaptée pour délivrer des signaux analogiques représentatifs de consignes de pilotage. Cette console possède deux manches de pilotage à deux degrés de liberté, affectés au contrôle du tangage, du roulis, du lacet et du pas collectif de l'hélicoptère. De façon classique, cette console est équipée d'interrupteurs et potentiomètres pour permettre un contrôle de la puissance d'émission, de la vitesse de rotation du moteur et des phases de démarrage (contrôle de température).

Cette console de pilotage CP est en particulier du type "PCM" ("Pulse Code Modulation") ou "PPM" ("Pulse Pause Modulation") délivrant des signaux analogiques, soit modulés en largeur d'impulsion, soit modulés en largeur de pause entre impulsions (de largeur constante). Les signaux issus de cette console CP sont composés de séquences successives à une fréquence déterminée (par exemple de 40 Hertz). La console CP peut aussi être purement analogique et délivrer des signaux analogiques non modulés, directement proportionnels aux consignes de pilotage.

Ces signaux sont délivrés vers une unité de conversion analogique/numérique AD-PCM qui les convertit en données numériques directement accessibles par un calculateur. Cette unité de conversion peut en particulier comprendre un compteur incrémental qui écrit dans un registre et peut engendrer une interruption vers une unité centrale de calcul, au front montant ou descendant des impulsions des signaux reçus, afin que l'unité centrale puisse interroger la valeur du compteur incrémental.

Le convertisseur AD-PCM est relié à un bus -BUSₛ- d'adresses, de données et de contrôle, en particulier de type asynchrone.

Une unité de mémorisation volatile RAMₛ est relié au bus en vue de lire et mémoriser les données numériques transmises par celui-ci. La capacité de cette mémoire est déterminée par la largeur du bus d'adresses et de données, notamment 16 bits correspondant à une capacité de mémoire de 64 kilo-octets.

Au bus -BUSₛ- est également reliée une unité centrale de calcul ALUₛ adaptée pour réaliser des opérations logiques sur les données mémorisées dans la RAMₛ selon des programmes d'exploitation déterminés dont des exemples sont fournis plus loin. Cette unité de calcul comprend des opérateurs logiques aptes à travailler sur une largeur de 16 bits pour réaliser essentiellement les opérations suivantes : opérations arithmétiques de base, branchements conditionnels et inconditionnels de base, opérations boolèennes, accès directs, indirects et indexés en mémoire... La puissance de calcul de cette unité est de l'ordre de 1 mips (mega instructions par seconde).

Une unité de mémorisation non volatile ROMₛ contient les programmes d'exploitation pour l'unité centrale ALUₛ que cette dernière prélève via le bus. Cette mémoire peut avoir une capacité analogue à la mémoire volatile RAMₛ.

Par ailleurs, un module de communication asynchrone UARTₛ est connecté au bus afin de transformer des données issues de l'unité de calcul en un signal sériel norme "RS 232", et de recevoir un signal sériel et de charger les données correspondantes dans un registre interne accessible par l'unité centrale ALUₛ. Cette unité UARTₛ est choisie avec un débit de transmission de l'ordre de 120 kilobits/s. Sa fréquence de réception et transmission est imposée par l'unité centrale ALUₛ. Il est à noter que le contrôle de cette fréquence peut, le cas échéant, être effectué par un signal externe issu d'une horloge spécifique.

Une unité de modulation/démodulation MODEMₛ est reliée au module UARTₛ, avec pour fonction, d'une part, de moduler le signal sériel issu de ce module UARTₛ en vue de l'émission, d'autre part, de démoduler des signaux modulés provenant des organes de réception et de les transmettre au module UARTₛ. La modulation est en particulier réalisée à une fréquence intermédiaire proche d'une sous-porteuse modulante moyenne fréquence ; cette modulation/démodulation est préférentiellement de type FM à faible puissance, le signal de sortie étant adapté aux organes d'émission.

Ces organes d'émission sont constitués par un module de transmission/réception radio HF_{S}, composé de façon classique d'un duplexeur découplant les signaux émis par l'antenne et les signaux reçus par celle-ci, d'une station de modulation FM transposant les signaux de moyenne fréquence issus de MODEMₛ en signaux haute fréquence, d'une station de démodulation FM démodulant les signaux haute fréquence issus du duplexeur et les transposant en signaux moyenne fréquence adaptés à l'unité MODEMₛ et d'un amplificateur haute fréquence amplifiant les signaux modulés en HF (40 à 200 watts sous 50 ohms).

L' infrastructure peut en outre être avantageusement équipée d'un module d'adaptation DRIVERₛ permettant d'assurer la compatibilité entre le module UARTₛ et un ordinateur personnel PC₂ destinés à des tests de vérification. Ce module DRIVERₛ peut être de type "MAX 239". L'ordinateur PC₂ peut être utile pour contrôler la qualité du faisceau hertzien avec le dispositif embarqué (extraction de paramètres statistiques tels que le pourcentage de messages à répéter, le pourcentage d'erreurs, ...).

En outre, l'infrastructure comprend un port d'entrées/sorties binaires DIOₛ, relié au bus pour être commandé ou contrôlé par l'unité centrale ALUₛ. Ce port est doté en sortie d'une série de lignes à état binaire qui sont, soit lues pour charger des registres internes, soit modifiées à partir du contenu de ces registres.

Un ensemble d'actuateurs et capteurs binaires PANEL est connecté sur les lignes binaires en vue, soit de disposer les actuateurs dans des configurations correspondant aux états des lignes, soit de traduire sur les lignes les états des capteurs. Par exemple, plusieurs actuateurs peuvent être constitués par des diodes d'alarme changeant d'état lorsque l'unité de calcul ALUₛ a détecté des données correspondant à un niveau minimum d'essence sur l'hélicoptère, une température de moteur trop élevée, une température ambiante dans l'hélicoptère trop élevée, des contraintes mécaniques trop élevées, une altitude trop basse, une vitesse de rotation anormale du moteur. De plus, plusieurs capteurs peuvent être constitués par des interrupteurs, des boutons-poussoirs, un manche à deux états discontinus, qui sont à la disposition du pilote afin que l'unité centrale ALUₛ puisse envoyer des instructions particulières vers l'hélicoptère, par exemple commande de caméra montée dans l'hélicoptère (mise en marche, commande de téléobjectif, commande d'orientation), lâchers de parachute, changement de mode de pilotage...

De plus, un module de communication série/parallèle SER/PAR est connecté au BUSₛ pour réaliser des échanges de données entre l'unité centrale ALUₛ et des périphériques, en particulier ordinateur personnel PC₁, terminal de poche TERM, imprimante PRN, ordinateur hôte HOST. Ce module SER/PAR est essentiellement composé d'un processeur de communication multiprotocole, de décodeurs d'adresses pour la lecture et l'écriture dans des registres spécialisés du processeur de communication, et de modules d'adaptation (analogues au module DRIVERₛ déjà évoqué). Ce module permet l'intégration complète du système décrit avec une informatique traditionnelle en vue d'un contrôle ou d'une action sur ce système. Par exemple, une banque de données géographiques peut être consultée par l'ordinateur HOST afin de constituer un fichier de trajectoires, celui-ci étant téléchargé dans le dispositif embarqué via l'infrastructure au sol. L'ordinateur personnel PC₁ peut permettre une visualisation numérique des données d'altitude de l'aéronef.

En outre, un périphérique de gestion d'écran SCREEN peut être relié à l'unité centrale ALUₛ à travers le bus en vue de la visualisation de données en temps réel, notamment sous forme graphique.

Par ailleurs, le dispositif embarqué dans l'aéronef est installé dans un châssis rigide, résistant au choc, et isolé électriquement, électromagnétiquement et mécaniquement. Comme le schématise la figure 2, ce dispositif embarqué comprend un module de transmission/réception radio HFₑ formant avec le module HF_{S} un faisceau hertzien. Ce module adapté pour transmettre et recevoir des signaux modulés est similaire au module HF_{S}.

Ce module HFₑ est relié à une unité de modulation/démodulation MODEMₑ similaire à l'unité MODEMₛ, ce module étant adapté, d'une part, pour moduler un signal sériel en bande de base et le transmettre à moyenne fréquence au module HFₑ, d'autre part, pour démoduler les signaux moyenne fréquence en provenance du module HFₑ et délivrer des signaux sériels en bande de base vers un module de communication asynchrone UARTₑₘ.

Ce module UARTₑₘ est connecté à un bus BUSₑₘ afin, d'une part, de transformer les données présentées sur ce bus en un signal sériel à transmettre vers le module MODEMₛ, d'autre part, de recevoir le signal sériel issu de l'unité MODEMₑ et de le convertir en données qui sont chargées dans un registre interne.

Ce dispositif comprend également une unité de mémorisation volatile RAMₑₘ similaire à l'unité RAMₛ en vue de mémoriser les données numériques.

Une unité centrale de calcul ALUₑₘ est reliée au BUSₑₘ afin de réaliser des opérations logiques sur les données mémorisées. Cette unité est similaire à l'unité ALUₛ ; comme celle-ci, elle est en particulier agencée pour avoir accès au registre interne du module UARTₑₘ. Une unité de mémorisation non volatile ROMₑₘ contient les programmes d'exploitation de l'unité centrale ALUₑₘ.

En outre, une unité de conversion numérique/analogique D/A-PCM est reliée au bus BUSₑₘ pour engendrer un signal analogique composite de commande à partir des données traitées par l'unité de calcul ALUₑₘ et présentées par le bus. Cette unité constituée de temporisateurs et de générateurs d'interruptions est en particulier adaptée pour engendrer un signal composite sous forme de trames d'impulsions modulées en largeur à fréquence déterminée notamment 40 Hz.

Ce signal composite est démultiplexé et mis en forme dans un démodulateur DEM qui délivre sur plusieurs lignes des signaux analogiques simples (modulés en "PCM" ou "PPM") directement compréhensible par les servomoteurs SV de l'aéronef.

De plus, un port d'entrées/sorties binaires DIOₑₘ est connecté sur le bus BUSₑₘ pour être commandé ou contrôlé par l'unité centrale ALUₑₘ. Ce port est doté en sortie d'une série de lignes à états binaires qui sont, soit lus pour charger des registres internes, soit modifiés à partir du contenu de ces registres. Les lignes de ce port sont reliées à un ensemble d'actuateurs et capteurs binaires DACT qui présentent des états commandés ou contrôlés par ledit port. Par exemple, des actuateurs sont constitués par des interrupteurs électroniques d'allumage de feux, projecteurs, lâcher de parachute, blocage de l'allumage moteur ; plusieurs capteurs peuvent être constitués par des jauges de température, de niveau d'essence afin que les paramètres numériques correspondants soient transmis vers l'infrastructure au sol.

Par ailleurs, le dispositif comprend un ensemble de capteurs IMAG comportant des inclinomètres I, magnétomètre M, accéléromètres A, gyromètres G, altimètre L, indicateur de vitesse V, et divers indicateurs notés N tels que compte-tours, jauge de carburant, indicateur de charge d'alternateur... qui fournissent des signaux analogiques représentatifs de la position, du comportement de l'aéronef et de ses paramètres internes. Les inclinomètres, notamment au nombre de 2, délivrent chacun sous forme de tension analogique un signal représentatif de l'inclinaison, soit en tangage, soit en roulis de l'aéronef. Le magnétomètre délivre un signal analogue représentatif du cap magnétique de l'aéronef. Les accéléromètres, notamment au nombre de 3, délivrent chacun sous forme de tension analogique un signal représentatif de l'accélération inertielle de l'aéronef autour des trois axes. Un filtrage passe-bas analogique permet de s'affranchir des vibrations de l'aéronef. Les gyromètres, notamment au nombre de 3, sont en particulier constitués par des capteurs de déplacement linéaire à induction magnétique, par exemple de type "LVDT" (Linear Vertical Displacement Transducer") couplés à une masse en rotation ; chaque capteur lorsqu'il est excité par un signal d'excitation délivre un signal modulé en phase, image de déplacement angulaire du gyromètre. Ce signal est démodulé dans un démodulateur gyroscopique DG pour délivrer une tension analogique représentative de la vitesse angulaire de l'aéronef autour de ses trois axes.

Les signaux analogiques issus des capteurs IMAG sont échantillonnés et numérisés dans un convertisseur analogique/numérique multicanaux A/Dₑ pour charger les données numériques correspondantes dans des registres internes accessibles par l'unité centrale ALUₑₘ qui les place dans l'unité de mémorisation RAMₑₘ. Ce convertisseur A/Dₑ est adapté pour fournir des données numériques à 11 bits de précision.

Le dispositif embarqué peut être avantageusement équipé d'un module d'adaptation DRIVERₑₘ permettant d'assurer la compatibilité entre le module UARTₑₘ et un ordinateur personnel PC₃ en vue de tests de vérification lorsque l'aéronef est au sol. Ce module est notamment du type "MAX 239". L'ordinateur PC₃ peut être utile pour, d'une part, contrôler la qualité du faisceau hertzien avec l'infrastructure au sol, d'autre part, effectuer un contrôle de fonctionnement des différents organes de l'aéronef.

En outre, une interface universelle UPI est connectée sur le bus BUSₑₘ en vue de réaliser des échanges de données entre l'unité centrale ALUₑₘ et des périphériques auxiliaires AUX possédant une interface UPIₑₓ compatible avec l'interface UPI.

En particulier, l'interface UPI peut être connectée à un processeur auxiliaire AUX comprenant essentiellement une unité de calcul ALUₑₓ, une unité de mémorisation volatile RAMₑₓ pour la mémorisation de résultats intermédiaires, une unité de mémorisation non volatile ROMₑₓ contenant des programmes d'exploitation de l'unité de calcul ALUₑₓ, un module de communication asynchrone UARTₑₓ, une unité d'adaptation DRIVERₑₓ adaptée pour assurer la compatibilité entre le module de communication UARTₑₓ et un module d'acquisition de données géodésiques GPS. Les modules ou unités de ce processeur auxiliaire ont des fonctionnalités identiques à ceux décrits précédemment. Le module GPS est de type "Global Positioning System" qui déduit des coordonnées géodésiques, de signaux captés en provenance d'un réseau GPS de satellites géostationnaires. Les coordonnées géodésiques sont engendrées sous forme sérielle par le module GPS et sont représentatives de la latitude, longitude, altitude et vitesse spatiale de l'aéronef. Ce processeur auxiliaire a pour but de décharger l'unité centrale ALUₑₘ de calculs spécifiques de navigation, essentiellement mathématiques, et de stocker dans sa mémoire RAMₑₓ des données en provenance de l'infrastructure au sol en vue d'alléger la mémoire RAMₑₘ.

Comme les exemples de fonctionnement fournis ci-après l'illustrent, le système de l'invention constitue un système intelligent capable d'évaluer quantitativement le comportement de l'aéronef et ses paramètres d'environnement, de traiter les données correspondantes et d'engendrer un comportement normalisé qui simplifie considérablement le pilotage et décharge le pilote de multiples tâches (tâches exigées par les aléas ambiants, les caractéristiques physiques de l'aéronef...). Un tel système permet de doter l'aéronef d'équipements divers tels que caméra... pour effectuer de multiples missions (missions hors vue, de reconnaissance, de contrôle...).

### VARIATIONS DUES A L'ENVIRONNEMENT : CAS D'UNE RAFALE LATERALE

L'hélicoptère a tendance à s'incliner autour de l'axe de roulis. L'amorce d'inclinaison est détectée par l'un des gyromètres G (gyromètre de roulis) et par l'inclinomètre de roulis I de l'ensemble de capteurs IMAG du dispositif embarqué.

Le gyromètre G fournit, après démodulation dans le démodulateur gyroscopique DG, une information représentative de la vitesse angulaire autour de l'axe de roulis et l'inclinomètre I fournit une information représentative du déplacement angulaire autour de cet axe.

Ces informations analogiques sont identifiées par leur canal analogique afin d'en connaître la provenance et d'associer ultérieurement le programme d'exploitation adéquat. Ces informations sont numérisées dans le convertisseur A/Dₑ et sont ensuite transmises sur le BUSₑₘ et mémorisées dans l'unité de mémorisation volatile RAMₑₘ.

L'unité centrale ALUₑₘ appelle, d'une part, le programme d'exploitation correspondant dans l'unité de mémorisation non volatile ROMₑₘ et, d'autre part, les données elles-mêmes dans l'unité de mémorisation RAMₑₘ afin de traiter ces dernières.

Ce traitement s'effectue à l'aide de l'algorithme de régulation chargé dans ROMₑₘ.

Les données traitées sont ensuite transmises par le BUSₑₘ vers l'unité de conversion D/A-PCM et le signal analogique est mis en forme dans le démodulateur DEM afin de délivrer, sur le canal analogique du servomoteur de roulis, la commande et pour effectuer la correction nécessaire ; le cycle se poursuit jusqu'au retour à la consigne de pilotage.

Les variations détectées par les gyromètres et les inclinomètres de tangage et de lacet sont traitées de façon analogue.

Les variations de roulis, tangage, lacet, pas cyclique sont traitées simultanément de façon analogue.

Si l'un des paramètres varie, les autres paramètres pouvant être affectés par cette variation sont instantanément pris en compte et traités.

### VARIATIONS COMMANDEES PAR LE PILOTE

Le pilote pousse le manche correspondant au pas collectif vers l'avant sur la console de pilotage CP de l'infrastructure.

Les données correspondantes à cette commande sont en particulier sous forme PCM ; elles sont transmises à l'unité de conversion analogique numérique AD-PCM.

Un algorithme, situé dans l'unité de mémorisation non volatile ROMₛ, s'enclenche à l'arrivée de chaque impulsion et va placer le résultat dans l'unité de mémorisation volatile RAMₛ par l'intermédiaire du BUSₛ.

Un second algorithme, situé également dans l'unité ROMₛ, va lire le contenu de l'unité RAMₛ placé par le premier algorithme et le transmettre au module de communication asynchrone UARTₛ ; ce dernier transforme les données en un signal sériel norme RS 232. Ce signal est ensuite modulé par l'unité de modulation/démodulation MODEMₛ et dirigé vers le module de radio HFₛ et ce, afin d'être émis via l'antenne.

Ce signal est reçu sur l'antenne de l'hélicoptère et entre dans le module de transmission radio HFₑ. Ce signal est démodulé par l'unité de modulation/démodulation MODEMₑ et le signal série issu de ce traitement se présente à l'entrée du module de communication asynchrone UARTₑₘ. L'arrivée de ce signal enclenche l'algorithme de régulation situé dans ROMₑₘ qui interprète le signal et le place dans RAMₑₘ. L'algorithme intègre alors ses signaux avec les données mesurées par les divers capteurs et génère un résultat qu'il place dans le RAMₑₘ.

Un troisième algorithme va lire le résultat de l'algorithme de régulation et le placer à l'entrée de l'unité de conversion numérique/analogique DIA PCM. Le signal composite issu de D/A PCM est décomposé par le démodulateur DEM en signaux analogiques simples directement compréhensibles par les servomoteurs.

Toute autre variation induite par le pilotage manuel de l'engin est prise en compte par le calculateur et est traitée pour conserver la consigne de pilotage.

### INTERPRETATION DES DONNEES INDICATEURS

Les indicateurs du dispositif embarqué sont en particulier l'altimètre L, l'indicateur de vitesse V et les indicateurs N (jauge de carburant, charge d'alternateur).

Un algorithme situé dans l'unité ROMₑₘ va lire les données envoyées par les indicateurs via l'unité A/DE et place le résultat dans l'unité RAMₑₘ et ceci, X fois/seconde. Toutes les n secondes, un algorithme situé dans l'unité ROMₛ envoie un message d'interrogation via l'unité UARTₛ, l'unité MODEMₛ et l'unité HFₛ.

Le message reçu par l'unité HFₑ via l'unité MODEMₑ et l'unité UARTₑₘ déclenche un algorithme dans l'unité ROMₑₘ qui interprète le message reçu et va lire la valeur enregistrée dans l'unité RAMₑₘ et renvoie la réponse via les unités UARTₑₘ, MODEMₑ et HFₑ.

Le message reçu au sol par l'unité UARTₛ (via les unités HFₛ et MODEMₛ) déclenche un algorithme situé dans l'unité ROMₛ qui déplace le résultat des mesures dans l'unité RAMₛ ; le résultat est ensuite envoyé vers l'unité de communication multiprotocole SER/PAR pour pouvoir être interprété pour les périphériques HOST, PC1, TERM, PRN et ce, afin d'être affiché sur écran ou imprimé.

### NAVIGATION PAR LE MODULE GPS

Les données fournies par le module GPS sont envoyées sur le BUSₑₓ via l'unité d'adaptation DRIVERₑₓ et le module de communication UARTₑₓ. Un algorithme situé en ROMₑₓ interprète ces données et en déduit par traitement via l'unité ALUₑₓ les consignes d'attitude de l'hélicoptère en fonction du programme de route mémorisé dans l'unité RAMₑₓ. (L'altitude est la position angulaire de l'hélicoptère par rapport au plan horizontal).

Ces consignes sont envoyées sur les unités interfaces UPIₑₓ et UPI pour être interprétées par l'algorithme de stabilisation situé dans l'unité ROMₑₘ.

De la même façon et en même temps, les coordonnées géographiques de latitude et de longitude issues du module GPS sont envoyées dans l'unité RAMₑₘ. Ces données géographiques sont transmises au sol via le processus qui transmet les données indicateurs et ce, afin de pouvoir visualiser sur écran le déplacement de l'appareil sur la carte géographique du site de vol.

A tout moment, l'opérateur au sol peut effectuer un changement de route et modifier le programme de route mémorisé dans l'unité RAMₑₓ et ce, de la manière suivante.

L'opérateur à partir de l'unité PC1 commande le changement de route via l'unité SER/PAR.

Un algorithme situé dans l'unité ROMₛ prend les commandes en sortie de l'unité SER/PAR et les place dans l'unité RAMₛ.

Un second algorithme placé dans l'unité ROMₛ va lire le contenu de l'unité RAMₛ placé par le premier algorithme et le place à l'entrée de l'unité UARTₛ via le BUSₛ.

Le signal est envoyé via les unités MODEMₛ et HFₛ.

Ce signal reçu via les unités HFₑ, MODEMₑ et UARTₑₘ enclenche un algorithme dans l'unité ROMₑₘ.

Cette dernière traite, via l'unité ALUₑₘ, les données reçues et les place, via les unités interfaces UPI et UPIₑₓ, dans le programme de route situé dans l'unité RAMₑₓ.

## Revendications

1. Système de contrôle d'un hélicoptère téléguidé équipé de servo-moteurs, en particulier servo-moteurs pour la manoeuvre du pas collectif et du plateau cyclique et servo-moteurs d'anticouple, comprenant une infrastructure de pilotage à distance et un dispositif embarqué sur l'hélicoptère, caractérisé en ce que :
(a) l'infrastructure de pilotage comprend :
. une console de pilotage (CP) adaptée pour délivrer des signaux de pilotage analogiques, en particulier signaux de contrôle du tangage, du roulis, du lacet et du pas collectif,
. une unité de conversion analogique/numérique (A/D - PCM) pour convertir ces signaux en données numériques,
. une unité de mémorisation volatile (RAMₛ) pour mémoriser les données numériques,
. une unité centrale de calcul (ALUₛ) pour réaliser des opérations logiques sur les données mémorisées selon des programmes d'exploitation déterminés,
. une unité de mémorisation non volatile (ROMₛ) contenant les programmes d'exploitation pour l'unité centrale (ALUₛ),
. un module de communication asynchrone (UARTₛ) adapté pour transformer des données issues de l'unité de calcul en un signal sériel, et pour convertir un signal sériel reçu et charger les données correspondantes dans un registre interne accessible par l'unité centrale (ALUₛ),
. une unité de modulation/démodulation (MODEMₛ) adaptée pour moduler le signal sériel issu du module (UARTₛ) et démoduler des signaux modulés et les transmettre audit module (UARTₛ),
. un module de transmission/réception radio (HFₛ) pour amplifier et transmettre les signaux modulés issus de l'unité (MODEMₛ) et recevoir les signaux modulés émis par le dispositif embarqué,
. un port d'entrées/sorties binaires (DIOₛ) commandé ou contrôlé par l'unité centrale (ALUₛ),
. un ensemble d'actuateurs et capteurs binaires (PANEL) présentant des états commandés ou contrôlés par le port (DIOₛ),
. un module de communication série/parallèle (SER/PAR) adapté pour réaliser des échanges de données entre l'unité centrale (ALUₛ) et des périphériques, en particulier ordinateur personnel (PC₁), terminal de poche (TERM), imprimante (PRN), ordinateur hôte (HOST),
. un périphérique de gestion d'écran (SCREEN) relié à l'unité centrale de calcul (ALUₛ) en vue de la visualisation de données,
(b) le dispositif embarqué comprend :
. un module de transmission/réception radio (HFₑ), formant avec le module (HF_{S}) un faisceau hertzien, et adapté pour transmettre et recevoir des signaux modulés,
. une unité de modulation/démodulation (MODEMₑ) adaptée pour moduler un signal sériel et le transmettre au module (HFₑ), et démoduler les signaux en provenance de ce module (HFₑ),
. un module de communication asynchrone (UARTₑₘ) adapté pour transformer des données en signal sériel et transmettre celui-ci vers l'unité (MODEMₑ), et pour convertir le signal sériel issu de l'unité (MODEMₑ) et charger les données correspondantes dans un registre interne,
. une unité de mémorisation volatile (RAMₑₘ) pour mémoriser les données numériques,
. une unité centrale de calcul (ALUₑₘ) pour réaliser des opérations logiques sur les données mémorisées, ladite unité ayant accès au registre interne du module (UARTₑₘ),
. une unité de mémorisation non volatile (ROMₑₘ) contenant des programmes d'exploitation pour l'unité centrale (ALUₑₘ),
. une unité de conversion numérique/analogique (D/A - PCM) adaptée pour engendrer un signal analogique composite de commande à partir des données traitées par l'unité de calcul,
. un démodulateur (DEM) adapté pour recevoir le signal composite précité et délivrer vers chaque servo-moteur de l'aéronef un signal analogique simple compréhensible par celui-ci,
. un port d'entrées/sorties binaires (DIOₘₑ) commandé ou contrôlé par l'unité centrale (ALUₘₑ),
. un ensemble d'actuateurs et capteurs binaires (DACT) présentant des états commandés ou contrôlés par le port (DIOₘₑ),
. un ensemble de capteurs (IMAG) comportant en particulier des inclinomètres, magnétomètre, accéléromètres, gyromètres, altimètre, indicateur de vitesse, compte-tours, jauge de carburant, indicateur de charge d'alternateur, aptes à fournir des signaux analogiques représentatifs de la position, du comportement et de paramètres internes de l'hélicoptère,
. un convertisseur analogique/numérique multicanaux (A/Dₑ) pour convertir les signaux analogiques issus des capteurs (IMAG) en données numériques et les placer dans l'unité de mémorisation (RAMₑₘ),
. une interface universelle (UPI) pour réaliser des échanges de données entre l'unité centrale (ALUₘₑ) et des périphériques (AUX), en particulier un processeur auxiliaire relié à un module d'acquisition de données géodésiques (GPS) à travers une unité d'adaptation (DRIVERₑₓ) adaptée pour assurer la compatibilité entre ledit périphérique et le module d'acquisition de données géodésiques (GPS).

2. Système de contrôle selon la revendication 1, caractérisé en ce que l'infrastructure de pilotage à distance et le dispositif embarqué comprennent chacun un module d'adaptation (DRIVERₛ , DRIVERₑₘ) adapté pour assurer la compatibilité entre le module de communication (UARTₛ, UARTₘₑ) et un ordinateur personnel (PC₂), en vue de tests de vérification.

## Patentansprüche

1. System zum Steuern eines ferngesteuerten Hubschraubers, der mit Servomotoren, insbesondere Servomotoren zum Steuern der nichtperiodischen Steigung und der Fluglage sowie Servomotoren für den Drehmomentausgleich versehen ist, umfassend eine Fernsteuerinfrastruktur und ein an Bord des Hubschraubers befindliches Gerät, dadurch gekennzeichnet, daß:
(a) die Steuerinfrastruktur folgende Einheiten umfaßt:
. eine Steuerkonsole (CP), die so beschaffen ist, daß sie analoge Steuersignale liefert, und zwar insbesondere Signale zum Steuern des Nickens, des Rollens, des Gierens und der nichtperiodischen Steigung,
. eine Analog/Digital-Umformeinheit (A/D - PCM) zum Umformen dieser Signale in digitale Daten,
. eine leistungsabhängige Speichereinheit (RAMₛ) zum Speichern der digitalen Daten,
. eine zentrale Recheneinheit (ALUₛ) zum Durchführen von Logikoperationen an den gespeicherten Daten nach vorgeschriebenen Betriebsprogrammen,
. eine leistungsunabhängige Speichereinheit (ROMₛ), die die Betriebsprogramme für die Zentraleinheit (ALUₛ) enthält,
. einen Asynchronkommunikationsbaustein (UARTₛ), der so beschaffen ist, daß er die von der Recheneinheit gelieferten Daten in ein serielles Signal umwandelt und ein empfangenes serielles Signal umformt und die entsprechenden Daten in ein für die Zentraleinheit (ALUₛ) zugängliches Innenregister eingibt,
. eine Modulations-/Demodulationseinheit (MODEMₛ), die so beschaffen ist, daß sie das von dem Baustein (UARTₛ) gelieferte serielle Signal moduliert und die modulierten Signale demoduliert und sie an den besagten Baustein (UARTₛ) überträgt,
. einen Funksende- und -empfangsbaustein (HFₛ) zum Verstärken und Übertragen der von der Einheit (MODEMₛ) gelieferten modulierten Signale und zum Empfangen der von dem Bordgerät abgestrahlten modulierten Signale,
. einen Anschluß für binäre Ein-/Ausgänge (DIOₛ), der durch die Zentraleinheit (ALUₛ) gesteuert bzw. geprüft wird,
. eine Gruppe von binären Stellantrieben und Wandlern (PANEL), die über den Anschluß (DIOₛ) gesteuerte bzw. geprüfte Zustände bieten,
. einen Baustein für serielle/parallele Kommunikation (SER/PAR), der so beschaffen ist, daß er Datenaustaüsche zwischen der Zentraleinheit (ALUₛ) und peripheren Geräten, insbesondere einem persönlichen Computer (PC₁), einem Taschenterminal (TERM), einem Druckwerk (PRN) und einem Wirtscomputer (HOST), bewirkt,
. ein peripheres Bildschirmverwaltungsgerät (SCREEN), das zwecks Datendarstellung mit der zentralen Recheneinheit (ALUₛ) verknüpft ist,
(b) das Bordgerät folgende Einheiten umfaßt:
. einen Funksende- und -empfangsbaustein (HFₑ), der gemeinsam mit dem Baustein (HFₛ) eine Richtfunkstrecke bildet und so beschaffen ist, daß er modulierte Signale sendet und empfängt,
. eine Modulations-/Demodulationseinheit (MODEMₑ), die so beschaffen ist, daß sie ein serielles Signal moduliert und es an den Baustein (HFₑ) überträgt und daß es die von diesem Baustein (HFₑ) gelieferten Signale demoduliert,
. einen Asynchronkommunikationsbaustein (UARTₑₘ), der so beschaffen ist, daß er Daten zu einem seriellen Signal umformt und diese an die Einheit (MODEMₑ) überträgt und daß er das von der Einheit (MODEMₑ) gelieferte serielle Signal umformt und die entsprechenden Daten in ein Innenregister eingibt,
. eine leistungsabhängige Speichereinheit (RAMₑₘ) zum Speichern der digitalen Daten,
. eine zentrale Recheneinheit (ALUₑₘ) zum Durchführen von Logikoperationen an den gespeicherten Daten, wobei die besagte Einheit Zugriff zu dem Innenregister des Bausteins (UARTₑₘ) hat,
. eine leistungsunabhängige Speichereinheit (ROMₑₘ), die Betriebsprogramme für die Zentraleinheit (ALUₑₘ) enthält,
. eine Einheit für Digital-/Analogumformung (D/A -PCM), die so beschaffen ist, daß sie aufgrund der durch die Recheneinheit verarbeiteten Daten ein zusammengesetztes analoges Steuersignal erzeugt,
. einen Demodulator (DEM), der so beschaffen ist, daß er das vorstehend genannte zusammengesetzte Signal empfängt und jedem Servomotor des Luftfahrzeugs ein einfaches, für diesen Servomotor verständliches Analogsignal liefert,
. ein durch die Zentraleinheit (ALUₘₑ) gesteuerter bzw. geprüfter Anschluß für binäre Ein-/Ausgänge (DIOₘₑ),
. eine Gruppe von binären Stellantrieben und Wandlern (DACT), die über den Anschluß (DIOₘₑ) gesteuerte bzw. geprüfte Zustände bieten,
. eine Gruppe von Wandlern (IMAG), umfassend insbesondere Neigungsmesser, ein Magnetometer, Beschleunigungsmesser, Kreisel, einen Höhenmesser, eien Fluggeschwindigkeitsmesser, einen Drehzahlmesser, einen Treibstoffvorratsanzeiger und ein Gerät zur Anzeige der Wechselstromgeneratorladung, wobei diese so beschaffen sind, daß sie für die Lage, das Verhalten und die Innenparameter des Hubschraubers repräsentative Analogsignale liefern,
. ein mehrkanäliger Analog-/Digital-Umformer (A/Dₑ) zum Umformen der von den Wandlern (IMAG) abgegebenen Analogsignale zu digitalen Daten und zu deren Eingabe in die Speichereinheit (RAMₑₘ),
. eine universelle Schnittstelle (UPI) zum Bewirken von Datenaustaüschen zwischen der Zentraleinheit (ALUₘₑ) und peripheren Geräten (AUX), insbesondere einem Hilfsprozessor, der mit einem Baustein zur Erfassung geodesischer Daten (GPS) verknüpft ist, und zwar über eine Anpaßeinheit (DRIVERₑₓ), die so beschaffen ist, daß sie Kompatibilität zwischen dem besagten peripheren Gerät und dem Baustein zur Erfassung geodesischer Daten (GPS) gewährleistet.

2. Steuersystem nach Anspruch 1, dadurch gekennzeichnet, daß die Fernsteuerinfrastruktur und das Bordgerät je einen Anpaßbaustein (DRIVERₛ, DRIVERₑₘ) umfassen, der so beschaffen ist, daß er zwecks Durchführung von Überprüfungen Kompatibilität zwischen dem Kommunikationsbaustein (UARTₛ, UARTₘₑ) und einem persönlichen Computer (PC₂) gewährleistet.

## Claims

1. Control system for a remotely piloted helicopter equipped with servomotors, in particular servomotors for operating collective pitch and attitude and anti-torque servomotors, comprising an infrastructure for remote piloting and a device on board the helicopter, characterised in that:
(a) the steering infrastructure comprises:
. a piloting console (CP) so designed as to supply analogue piloting signals, in particular signals for controlling pitch, roll, yaw and collective pitch,
. an analogue/digital conversion unit (A/D - PCM) for converting these signals into digital data,
. a volatile-storage unit (RAMₛ) for storing the digital data,
. a central computing unit (ALUₛ) for subjecting the stored data to logical operations according to specified operating programs,
. a non-volatile-storage unit (ROMₛ) comprising the operating programs for the central unit (ALUₛ),
. an asynchronous-communication module (UARTₛ) designed for converting the data emanating from the computing unit into a serial signal and for converting a received serial signal and loading the corresponding data into an internal register capable of being accessed by the central unit (ALUₛ),
. a modulation/demodulation unit (MODEMₛ) designed for modulating the serial signal emanating from the module (UARTₛ) and for demodulating the modulated signals and transmitting them to said module (UARTₛ),
. a radio-transmission/reception module (HFₛ) for amplifying and transmitting the modulated signals emanating from the unit (MODEMₛ) and for receiving the modulated signals emitted by the on-board device,
. a port for binary inputs/outputs (DIOₛ) which is controlled or checked by the central unit (ALUₛ),
. an assembly of binary actuators and transducers (PANEL) presenting states controlled or checked via the port (DIOₛ),
. a serial/parallel communication module (SER/PAR) so designed as to bring about data exchanges between the central unit (ALUₛ) and peripherals, in particular a personal computer (PC₁), a pocket terminal (TERM), a printer (PRN), and a host computer (HOST),
. a screen-management peripheral (SCREEN) linked with the central computing unit (ALUₛ) with a view to displaying data,
(b) the on-board device comprises:
. a radio transmission/reception module (HFₑ) forming together with the module (HFₛ) a radio link and so designed as to transmit and receive modulated signals,
. a modulation/demodulation unit (MODEMₑ) designed for modulating a serial signal and transmitting it to the module (HFₑ) and for demodulating the signals emanating from this module (HFₑ),
. an asynchronous-communication module (UARTₑₘ) designed for transforming data into a serial signal and transmitting the latter to the unit (MODEMₑ) and for converting the serial signal emanating from the unit (MODEMₑ) as well as for loading the corresponding data into an internal register,
. a volatile-storage unit (RAMₑₘ) for storing the digital data,
. a central computing unit (ALUₑₘ) for subjecting the stored data to logical operations, said unit having access to the internal register of the module (UARTₑₘ),
. a non-volatile-storage unit (ROMₑₘ) comprising operating programs for the central unit (ALUₑₘ),
. a digital/analogue conversion unit (D/A - PCM) so designed as to generate a composite analogue control signal on the basis of data processed by the computing unit,
. a demodulator (DEM) so designed as to receive the aforementioned composite signal and supply to each servomotor of the aircraft a simple analogue signal which the latter can comprehend,
. a port for binary inputs/outputs (DIOₘₑ) controlled or checked by the central unit (ALUₘₑ),
. an assembly of binary actuators and transducers (DACT) presenting states controlled or checked via the port (DIOₘₑ),
. an assembly of transducers (IMAG) comprising in particular banking indicators, a magnetometer, acceleration indicators, turn indicators, an altimeter, an airspeed indicator, a rev counter, a fuel gauge, and an alternator-charge indicator, capable of supplying analogue signals representative of the position, behaviour and internal parameters of the helicopter,
. a multi-channel analogue/digital converter (A/Dₑ) for converting the analogue signals emanating from the transducers (IMAG) into digital data and inputting them into the storage unit (RAMₑₘ),
. a universal interface (UPI) for bringing about data exchanges between the central unit (ALUₘₑ) and peripherals (AUX), in particular an auxiliary processor linked to a module for the acquisition of geodesic data (GPS) through an adaptation unit (DRIVERₑₓ) so designed as to ensure compatibility between said peripheral and the module for the acquisition of geodesic data (GPS).

2. Control system according to Claim 1, characterised in that the infrastructure for remote piloting and the on-board device each comprise an adaptation module (DRIVERₛ, DRIVERₑₘ) so designed as to ensure compatibility between the communication module (UARTₛ, UARTₘₑ) and a personal computer (PC₂), with a view to carrying out verification checks.
